# EUROPEAN PATENT SPECIFICATION

(11) **EP 2 881 263 B1**
(45) Date of publication and mention of the grant of the patent: **17.04.2019**
(21) Application number: 14169560.1
(22) Date of filing: 23.05.2014
(51) Int. Cl.: B60C 9/20, B60C 9/00, B60C 9/18

(54) **Two-wheeled vehicle tire**
Reifen für zweirädriges Fahrzeug
Pneu de véhicule à deux roues

(30) Priority: 03.12.2013 JP 2013249997
(43) Date of publication of application: 10.06.2015
(73) Proprietor: SUMITOMO RUBBER INDUSTRIES, LTD., Kobe-shi, Hyogo 651-0072 (JP)
(72) Inventor: Okada, Takashi, Kobe-shi, Hyogo 651-0072 (JP)
(74) Representative: TBK

(56) References cited:
- EP-A1- 1 950 058
- EP-A2- 0 280 674
- FR-A- 1 290 231
- JP-A- H03 169 713
- JP-A- 2009 029 277
- US-A1- 2006 000 535

## Description

### BACKGROUND OF THE INVENTION

### Field of the Invention

The present invention relates to a two-wheeled vehicle tire.

### Description of the Background Art

When a two-wheeled vehicle runs straight, the two-wheeled vehicle is substantially upright, a crown portion of each tire mainly contacts with the ground. When a two-wheeled vehicle runs straight at a high speed, a great load caused by a centrifugal force is applied to the crown portion of each tire. The crown portion needs to have rigidity capable of withstanding the load. Insufficiency of the rigidity of the crown portion decreases straight running stability.

When a two-wheeled vehicle corners, a rider tilts the two-wheeled vehicle inward in order to obtain a sufficient camber thrust. Thus, during cornering, a shoulder portion of each tire mainly contacts with the ground. When a two-wheeled vehicle runs on a circuit such that a body thereof is greatly tilted, a great lateral force is applied to each shoulder portion of each tire. Each shoulder portion needs to have rigidity capable of withstanding the great lateral force. Insufficiency of the rigidity of each shoulder portion decreases cornering stability.

In order to increase the rigidity of each tire, a method may be used in which a carcass is formed by using three plies. However, in this method, the rigidity of the crown portion may be excessive. The excessive rigidity of the crown portion deteriorates absorbability of disturbance applied to the tire during straight running. This can be a factor that inversely deteriorates straight running stability. Furthermore, in the tire, the rigidity of each shoulder portion may be excessive. The excessive rigidity of each shoulder portion causes a slip of the tire during cornering. This can be a factor that deteriorates cornering stability.

A two-wheeled vehicle tire having improved running stability is disclosed in Japanese Laid-Open Patent Publication No. 10-147108. The tire includes a breaker (belt) composed of two layers in order to reinforce a carcass, and also includes, at a crown portion thereof, a ply having a smaller width than that of a tread.

US 2006/000535 A1 and FR 1 290 231 A likewise relate to a two-wheeled vehicle tire according to the preamble of either claim 1 or claim 2.

JP H03 169713 A discloses a two-wheeled vehicle tire according to the preamble of claim 1.

### SUMMARY OF THE INVENTION

A two-wheeled vehicle tire having further improved running stability during straight running and during cornering is desired. In the tire disclosed in JP H10-147108 A, the rigidity of the crown portion may be excessive due to the ply provided at the crown portion. The tire is inferior in running stability during straight running.

An object of the present invention is to provide a two-wheeled vehicle tire that achieves high running stability during straight running and during cornering.

This object is likewise solved by either the two-wheeled vehicle tire according to claim 1 or the two-wheeled vehicle tire according to claim 2. Further advantageous developments are subject-matters of the dependent claims.

A two-wheeled vehicle tire according to the present invention includes: a tread having an outer surface which forms a tread surface; a belt located inward of the tread in a radial direction; and a rubber layer located inward of the tread in the radial direction. The belt includes a first layer and a second layer located outward of the first layer in the radial direction. Each of the first layer and the second layer includes a large number of cords aligned with each other, and a topping rubber. The rubber layer is located between the first layer and the second layer. A thickness of the rubber layer on an equator plane is larger than a thickness of the rubber layer at each outer end, in an axial direction, of the rubber layer.

Preferably, the thickness of the rubber layer is maximum on the equator plane, and a shape of the rubber layer is tapered from a portion at which the thickness is maximum, toward an outer side in the axial direction.

According to claim 1, when a width from the equator plane to the outer end of the rubber layer in the axial direction is represented as Wi and a width from the equator plane to an outer end of the second layer in the axial direction is represented as Wb, a ratio (Wi/Wb) of the width Wi relative to the width Wb is not lower than 0.8 and not higher than 1.0.

According to claim 2, when a complex elastic modulus of the rubber layer is represented as Ei and a complex elastic modulus of the topping rubber is represented as Ec, a ratio (Ei/Ec) of the complex elastic modulus Ei relative to the complex elastic modulus Ec is not lower than 0.9 and not higher than 1.1.

Preferably, when the thickness of the rubber layer on the equator plane is represented as Ti and a thickness of the topping rubber is represented as Tc, a ratio (Ti/Tc) of the thickness Ti relative to the thickness Tc is not lower than 1.0 and not higher than 2.0.

The two-wheeled vehicle tire according to the present invention includes the rubber layer between the first layer and the second layer of the belt. The thickness of the rubber layer on the equator plane is larger than the thickness of the rubber layer at each outer end, in the axial direction, of the rubber layer. At and near the equator plane, the first layer and the second layer are separated from each other, and thus a holding force between the first layer and the second layer is decreased. This reduces the in-plane rigidity of a crown portion. The rubber layer suppresses the in-plane rigidity of the crown portion from being excessive. The crown portion is excellent in disturbance absorbability. Meanwhile, when a bending force is applied to the crown portion such that the crown portion deforms so as to project outward in the radial direction, a force is applied to the second layer in a pulling direction, and a force is applied to the first layer in a compressing direction. In the tire, since the first layer and the second layer are separated from each other, a greater pulling force is required for deformation of the second layer than in a tire in which the first layer and the second layer are not separated from each other. In other words, this structure enhances the out-of-plane bending rigidity of the crown portion. The tire including the crown portion is excellent in running stability during straight running.

In the two-wheeled vehicle tire according to the present invention, the first layer and the second layer are close to each other at each shoulder portion. Since the first layer and the second layer are close to each other, the holding force between the first layer and the second layer is great. This contributes to enhancement of in-plane rigidity. Each shoulder portion has sufficient in-plane rigidity. In the tire including the shoulder portions, high cornering power (CP) and self-aligning torque (SAT) are maintained during cornering. In addition, since the first layer and the second layer are close to each other, each shoulder portion has reduced out-of-plane bending rigidity. In the tire, the out-of-plane bending rigidity of each shoulder portion is suppressed from being excessive. The tire including the shoulder portions is excellent in running stability during cornering.

### BRIEF DESCRIPTION OF THE DRAWINGS

FIG. 1 is a cross-sectional view showing a portion of a pneumatic tire according to an embodiment of the present invention; and
FIG. 2 is an enlarged cross-sectional view showing a portion of a belt of the tire in FIG. 1.

### DESCRIPTION OF THE PREFERRED EMBODIMENTS

Hereinafter, the present invention will be described in detail based on preferred embodiments with appropriate reference to the drawings.

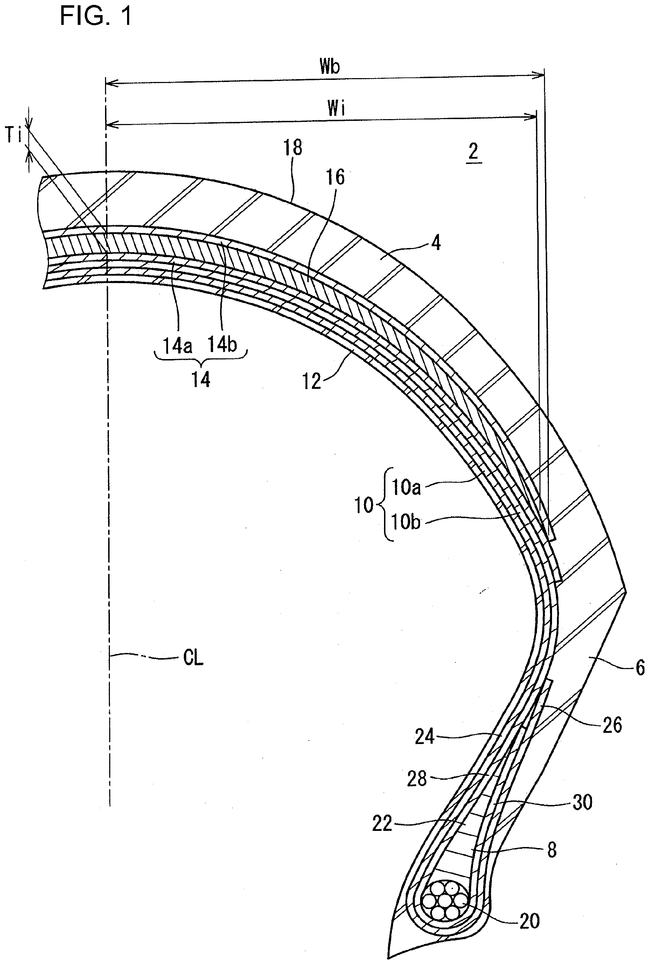

A pneumatic tire 2 shown in FIG. 1 includes a tread 4, sidewalls 6, beads 8, a carcass 10, an inner liner 12, a belt 14, and a rubber layer 16. The tire 2 is of a tubeless type. The tire 2 is mounted on a two-wheeled vehicle. In FIG. 1, the up-down direction is a radial direction, the right-left direction is an axial direction, and the direction perpendicular to the surface of the sheet is a circumferential direction. The tire 2 has a shape which is substantially bilaterally symmetrical about an alternate long and short dash line CL in FIG. 1. The alternate long and short dash line CL represents the equator plane of the tire 2.

The tread 4 is formed from a crosslinked rubber. The tread 4 has a shape projecting outward in the radial direction. The tread 4 has a tread surface 18. The tread surface 18 is brought into contact with a road surface. Grooves are formed on the tread surface 18, which is not shown. A tread pattern is formed by the grooves. It should be noted that no groove may be formed on the tread surface 18.

The sidewalls 6 extend from ends of the tread 4 substantially inward in the radial direction. The sidewalls 6 are formed from a crosslinked rubber. The sidewalls 6 absorb shocks from a road surface due to their flexure. Furthermore, the sidewalls 6 prevent injury of the carcass 10.

The beads 8 are located substantially inward of the sidewalls 6 in the axial direction. Each bead 8 includes a core 20 and an apex 22 extending from the core 20 outward in the radial direction. The core 20 has a ring shape. The core 20 is formed by a non-stretchable wire being wound. Typically, a steel wire is used for the core 20. The apex 22 is tapered outward in the radial direction. The apex 22 is formed from a highly hard crosslinked rubber.

The carcass 10 includes a first ply 10a and a second ply 10b. The first ply 10a and the second ply 10b extend on and between the beads 8 at both sides, and extend along the tread 4 and the sidewalls 6. The first ply 10a is turned up around each core 20 from the inner side to the outer side in the axial direction. Due to this turning-up, a main portion 24 and turned-up portions 26 are formed in the first ply 10a. The second ply 10b is turned up around each core 20 from the inner side to the outer side in the axial direction. Due to this turning-up, a main portion 28 and turned-up portions 30 are formed in the second ply 10b. Ends of the turned-up portions 26 of the first ply 10a are located outward of ends of the turned-up portions 30 of the second ply 10b in the radial direction.

Either one of the first ply 10a or the second ply 10b may not be turned up around each core 20. In other words, either one of the first ply 10a or the second ply 10b may not include turned-up portions.

Each of the first ply 10a and the second ply 10b includes a large number of cords aligned with each other, and a topping rubber, which are not shown. The absolute value of the angle of each cord relative to the equator plane is not lower than 65° and not higher than 90°. In other words, the carcass 10 has a radial structure. The cords are formed from an organic fiber. Examples of preferable organic fibers include polyester fibers, nylon fibers, rayon fibers, polyethylene naphthalate fibers, and aramid fibers. The carcass 10 may be formed from three or more plies.

The inner liner 12 is located inward of the carcass 10. The inner liner 12 is joined to the inner surface of the carcass 10. The inner liner 12 is formed from a crosslinked rubber. A rubber that has an excellent air blocking property is used for the inner liner 12. The base rubber of the inner liner 12 is typically isobutylene-isoprene-rubber or halogenated isobutylene-isoprene-rubber. The inner liner 12 maintains the internal pressure of the tire 2.

The belt 14 is located inward of the tread 4 in the radial direction. The belt 14 is laminated on the carcass 10. The belt 14 reinforces the carcass 10. The belt 14 includes a first layer 14a and a second layer 14b. The second layer 14b is located outward of the first layer 14a in the radial direction.

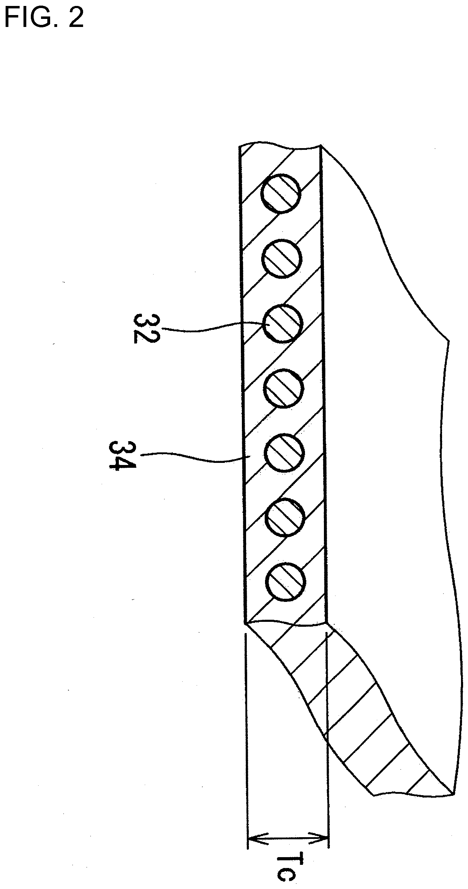

FIG. 2 is an enlarged cross-sectional view showing a portion of the first layer 14a or the second layer 14b. Each of the first layer 14a and the second layer 14b includes a large number of cords 32 aligned with each other, and a topping rubber 34. In the drawing, the first layer 14a or the second layer 14b is cut by a plane perpendicular to the direction in which each cord 32 thereof extends. Each cord 32 is tilted relative to the equator plane. The absolute value of the tilt angle is not lower than 15° and not higher than 30°. The direction in which each cord 32 of the first layer 14a is tilted relative to the equator plane is opposite to the direction in which each cord 32 of the second layer 14b is tilted relative to the equator plane. In the tire 2, the material of the cords 32 is an organic fiber. Preferable organic fibers are aramid fibers. The cords 32 may be formed from a polyester fiber, a nylon fiber, a rayon fiber, or a polyethylene naphthalate fiber. In addition, the material of the cords 32 may be steel.

The rubber layer 16 is located inward of the tread 4 in the radial direction. The rubber layer 16 is located between the first layer 14a and the second layer 14b. The rubber layer 16 is sandwiched between the first layer 14a and the second layer 14b. The thickness of the rubber layer 16 on the equator plane is larger than the thickness of the rubber layer 16 at each outer end, in the axial direction, of the rubber layer 16. Preferably, as shown in FIG. 1, the thickness of the rubber layer 16 is maximum on the equator plane. In the tire 2 in FIG. 1, the thickness of the rubber layer 16 is substantially uniform near the equator plane. The shape of the rubber layer 16 is tapered from the portion thereof at which the thickness is uniform, toward each outer end in the axial direction. The rubber layer 16 has a crescent-like shape. The shape of the rubber layer 16 may not have a portion at which the thickness is uniform, and may be tapered from a point on the equator plane toward each outer end in the axial direction.

Hereinafter, advantageous effects of the present invention will be described.

A two-wheeled vehicle tire having further improved running stability during straight running and during cornering is desired. When a two-wheeled vehicle runs straight at a high speed, a great load caused by a centrifugal force is applied to the crown portion of each tire. In order to achieve high running stability during straight running with respect to the load, the crown portion needs to have sufficient out-of-plane bending rigidity. The sufficient out-of-plane bending rigidity of the crown portion also contributes to enhancement of a camber thrust when running shifts from straight running to cornering. Furthermore, in order to improve running stability during straight running, the crown portion is required to have high disturbance absorbability. In other words, it is required that a condition such as unevenness of a road surface should not excessively affect steering. This is achieved by causing the in-plane rigidity of the crown portion to not be excessive. In order to achieve high running stability during straight running, it is important to increase the out-of-plane bending rigidity of the crown portion and cause the in-plane rigidity of the crown portion to not be excessive.

For running stability during cornering, it is required that a two-wheeled vehicle should immediately respond to a steering input of a rider. During cornering, each tire needs to have high cornering power (CP) and self-aligning torque (SAT). This is achieved by increasing the in-plane rigidity of each shoulder portion of the tire. Meanwhile, an excessive out-of-plane bending rigidity of each shoulder portion can cause a slip of the tire during cornering. The excessive out-of-plane bending rigidity of each shoulder portion can be a factor that deteriorates running stability during cornering. In order to achieve high running stability during cornering, it is important to increase the in-plane rigidity of each shoulder portion and cause the out-of-plane bending rigidity of each shoulder portion to not be excessive.

The two-wheeled vehicle tire 2 according to the present invention includes the rubber layer 16 between the first layer 14a and the second layer 14b of the belt 14. The thickness of the rubber layer 16 on the equator plane is larger than the thickness of the rubber layer 16 at each outer end, in the axial direction, of the rubber layer 16. At and near the equator plane, the first layer 14a and the second layer 14b are separated from each other, and thus a holding force between the first layer 14a and the second layer 14b is decreased. This reduces the in-plane rigidity of the crown portion. The rubber layer 16 suppresses the in-plane rigidity of the crown portion from being excessive. The crown portion is excellent in disturbance absorbability. Meanwhile, when a bending force is applied to the crown portion such that the crown portion deforms so as to project outward in the radial direction, a force is applied to the second layer 14b in a pulling direction, and a force is applied to the first layer 14a in a compressing direction. In the tire 2, since the first layer 14a and the second layer 14b are separated from each other, a greater pulling force is required for deformation of the second layer 14b than in a tire 2 in which the first layer 14a and the second layer 14b are not separated from each other. In other words, this structure enhances the out-of-plane bending rigidity of the crown portion. The tire 2 including the crown portion is excellent in running stability during straight running.

In the two-wheeled vehicle tire 2 according to the present invention, the first layer 14a and the second layer 14b are close to each other at each shoulder portion. Since the first layer 14a and the second layer 14b are close to each other, the holding force between the first layer 14a and the second layer 14b is great. This contributes to enhancement of in-plane rigidity. Each shoulder portion has sufficient in-plane rigidity. In the tire 2 including the shoulder portions, high CP and SAT are maintained during cornering. In addition, since the first layer 14a and the second layer 14b are close to each other, the out-of-plane bending rigidity is reduced. In the tire 2, the out-of-plane bending rigidity of each shoulder portion is suppressed from being excessive. The tire 2 including the shoulder portions is excellent in running stability during cornering.

In FIG. 1, a double-headed arrow Wb represents the width in the axial direction from the equator plane to an outer end, in the axial direction, of the second layer 14b. A double-headed arrow Wi represents the width in the axial direction from the equator plane to the outer end, in the axial direction, of the rubber layer 16. The ratio (Wi/Wb) is preferably not lower than 0.8. In the tire 2 including the rubber layer 16 having a ratio (Wi/Wb) of not lower than 0.8, the in-plane rigidity of the crown portion can be kept appropriate. The in-plane rigidity of the crown portion does not become excessive. The crown portion is excellent in disturbance absorbability. Furthermore, the crown portion has sufficient out-of-plane bending rigidity. The tire 2 is excellent in running stability during straight running. In this respect, the ratio (Wi/Wb) is more preferably not lower than 0.9. The maximum value of the ratio (Wi/Wb) is 1.0.

When the complex elastic modulus of the rubber layer 16 is represented as Ei and the complex elastic modulus of the topping rubber 34 is represented as Ec, the ratio (Ei/Ec) of the complex elastic modulus Ei relative to the complex elastic modulus Ec is preferably not higher than 1.1. In the tire 2 including the rubber layer 16 having a ratio (Ei/Ec) of not higher than 1.1, the out-of-plane bending rigidity of each shoulder portion does not become excessive. The tire 2 is excellent in running stability during cornering.

The ratio (Ei/Ec) is preferably not lower than 0.9. In the tire 2 including the rubber layer 16 having a ratio (Ei/Ec) of not lower than 0.9, each shoulder portion has sufficient in-plane rigidity. In the tire 2, high CP and SAT are maintained. The tire 2 including the shoulder portions is excellent in running stability during cornering. Furthermore, the rubber layer 16 contributes to achievement of favorable out-of-plane bending rigidity of the crown portion. The tire 2 is excellent in running stability during straight running. In this respect, the ratio (Ei/Ec) is more preferably not lower than 1.0.

The complex elastic modulus Ei is preferably not higher than 2.2 MPa. In the tire 2 including the rubber layer 16 having a complex elastic modulus Ei of not higher than 2.2 MPa, the out-of-plane bending rigidity of each shoulder portion does not become excessive. The tire 2 is excellent in running stability during cornering. In this respect, the complex elastic modulus Ei is more preferably not higher than 2.1 MPa.

The complex elastic modulus Ei is preferably not lower than 1.8 MPa. In the tire 2 including the rubber layer 16 having a complex elastic modulus Ei of not lower than 1.8 MPa, each shoulder portion has sufficient in-plane rigidity. In the tire 2, high CP and SAT are maintained. The tire 2 including the shoulder portions is excellent in running stability during cornering. Furthermore, the rubber layer 16 contributes to achievement of favorable out-of-plane bending rigidity of the crown portion. The tire 2 is excellent in running stability during straight running. In this respect, the complex elastic modulus Ei is more preferably not lower than 1.9 MPa.

In the present invention, the complex elastic modulus Ei of the rubber layer 16 and the complex elastic modulus Ec of the topping rubber 34 are measured with a viscoelastic spectrometer (manufactured by Iwamoto Seisakusho) in compliance with the standard of "JIS K 6394" under the following conditions.
Initial strain: 10%
Amplitude: ±2.5%
Frequency: 10 Hz
Deformation mode: tension
Measurement temperature: 100°C

In FIG. 1, a double-headed arrow Ti represents the thickness of the rubber layer 16 on the equator plane. Specifically, the thickness Ti is the distance in the radial direction between the inner surface and the outer surface of the rubber layer 16 on the equator plane. In FIG. 2, a double-headed arrow Tc represents the thickness of the topping rubber 34 of the first layer 14a or the second layer 14b. The ratio (Ti/Tc) of the thickness Ti relative to the thickness Tc is preferably not lower than 1.0. In the tire 2 including the rubber layer 16 having a ratio (Ti/Tc) of not lower than 1.0, the in-plane rigidity of the crown portion can be kept appropriate. The in-plane rigidity of the crown portion does not become excessive. The crown portion is excellent in disturbance absorbability. Furthermore, the rubber layer 16 contributes to enhancement of the out-of-plane bending rigidity of the crown portion. The tire 2 is excellent in running stability during straight running. In this respect, the ratio (Ti/Tc) is more preferably not lower than 1.2.

The ratio (Ti/Tc) is preferably not higher than 2.0. In the tire 2 including the rubber layer 16 having a ratio (Ti/Tc) of not higher than 2.0, the first layer 14a and the second layer 14b are close to each other at each shoulder portion. Each shoulder portion of the tire 2 has reduced out-of-plane bending rigidity. Furthermore, each shoulder portion of the tire 2 has sufficient in-plane rigidity. The tire 2 including the shoulder portions maintains favorable running stability during cornering. In this respect, the ratio (Ti/Tc) is more preferably not higher than 1.8.

The thickness Ti is preferably not smaller than 1.10 mm. In the tire 2 including the rubber layer 16 having a thickness Ti of not smaller than 1.10 mm, the in-plane rigidity of the crown portion can be kept appropriate. The in-plane rigidity of the crown portion does not become excessive. The crown portion is excellent in disturbance absorbability. Furthermore, the rubber layer 16 contributes to enhancement of the out-of-plane bending rigidity of the crown portion. The tire 2 is excellent in running stability during straight running. In this respect, the thickness Ti is more preferably not smaller than 1.20 mm.

The thickness Ti is preferably not larger than 2.20 mm. In the tire 2 including the rubber layer 16 having a thickness Ti of not larger than 2.20 mm, the first layer 14a and the second layer 14b can be close to each other at each shoulder portion. Each shoulder portion of the tire 2 has reduced out-of-plane bending rigidity. Furthermore, each shoulder portion of the tire 2 has sufficient in-plane rigidity. The tire 2 including the shoulder portions maintains favorable running stability during cornering. In this respect, the thickness Ti is more preferably not larger than 2.10 mm.

When the thickness of the rubber layer 16 at each outer end, in the axial direction, of the rubber layer 16 is represented as Te, which is not shown, the ratio (Te/Ti) of the thickness Te relative to the thickness Ti is preferably not higher than 0.3. In the tire 2 including the rubber layer 16 having a ratio (Te/Ti) of not higher than 0.3, the first layer 14a and the second layer 14b are close to each other at each shoulder portion. Each shoulder portion of the tire 2 has reduced out-of-plane bending rigidity. Furthermore, each shoulder portion of the tire 2 has sufficient in-plane rigidity. The tire 2 including the shoulder portions maintains favorable running stability during cornering. In this respect, the ratio (Te/Ti) is more preferably not higher than 0.2.

The thickness Te is preferably not larger than 0.3 mm. In the tire 2 including the rubber layer 16 having a thickness Te of not larger than 0.3 mm, the first layer 14a and the second layer 14b are close to each other at each shoulder portion. Each shoulder portion of the tire 2 has reduced out-of-plane bending rigidity. Furthermore, each shoulder portion of the tire 2 has sufficient in-plane rigidity. The tire 2 including the shoulder portions maintains favorable running stability during cornering. In this respect, the thickness Te is more preferably not larger than 0.2 mm.

In the present invention, the dimensions and angles of the tire 2 and each component of the tire 2 are measured in a state where the tire 2 is mounted on a normal rim and inflated to a normal internal pressure. During the measurement, no load is applied to the tire 2. In the present specification, the normal rim means a rim specified in a standard on which the tire 2 is based. The "standard rim" in the JATMA standard, the "Design Rim" in the TRA standard, and the "Measuring Rim" in the ETRTO standard are normal rims. In the present specification, the normal internal pressure means an internal pressure specified in the standard on which the tire 2 is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

### EXAMPLES

Hereinafter, effects of the present invention are shown by means of examples, but the present invention should not be construed in a limited manner based on the description of these examples.

### [Example 1]

A two-wheeled vehicle tire of Example 1 having the structure shown in FIG. 1 was obtained. The size of the tire was set as 120/70R17. The specifications of the tire are shown in Table 1 below. The complex elastic modulus Ei is 2.0 MPa, and the complex elastic modulus Ec is 1.8 MPa. Therefore, the ratio (Ei/Ec) is 1.1. The thickness Ti is 1.65 mm, and the thickness Tc is 1.1 mm. Therefore, the ratio (Ti/Tc) is 1.5. The shape of the rubber layer is tapered toward each outer end in the axial direction. In other words, the rubber layer has a crescent-like shape. The shape of the rubber layer is indicated as "Crescent-like" in the "Shape of rubber layer" row of the table. The thickness Te is not larger than 0.2 mm.

The material of the cords of the first ply and the second ply of the carcass is a rayon fiber. The absolute value of the angle of each of the cords relative to the equator plane is 70°. The structure of each of the cords is 1840 detx/2. The material of the cords of the inner layer and the outer layer of the belt is an aramid fiber. The absolute value of the angle of each of the cords relative to the equator plane is 22°. The structure of each of the cords is 1670 detx/2.

### [Comparative Example 1]

A tire of Comparative Example 1 was obtained in the same manner as Example 1, except that no rubber layer was included. This tire is a conventional tire.

### [Comparative Example 2]

A tire of Comparative Example 2 was obtained in the same manner as Example 1, except that the rubber layer has a shape having a uniform thickness from the equator plane to each outer end in the axial direction. The shape of the rubber layer is indicated as "Plate-like" in the "Shape of rubber layer" row of the table.

### [Examples 2 to 4]

Tires of Examples 2 to 4 were obtained in the same manner as Example 1, except that the width Wi was changed such that the ratio (Wi/Wb) was as shown in Table 1 below.

### [Examples 5 to 7]

Tires of Examples 5 to 7 were obtained in the same manner as Example 1, except that the complex elastic modulus Ei was changed such that the ratio (Ei/Ec) was as shown in Table 2 below.

### [Examples 8 to 13]

Tires of Examples 8 to 13 were obtained in the same manner as Example 1, except that the thickness Ti was changed such that the ratio (Ti/Tc) was as shown in Table 3 below.

### [Straight running stability and cornering running stability]

Each sample tire was fitted to a standard rim (size = MT3.50) and mounted to the front wheel of a two-wheeled vehicle having an engine displacement of 600 cc. The internal pressure of the tire was set to 250 kPa. A commercially available tire (size: 180/55R17) was mounted to the rear wheel of the two-wheeled vehicle and inflated such that the internal pressure thereof became 200 kPa. The two-wheeled vehicle was run on a circuit course having an asphalt road surface, and the rider made a sensory evaluation. The items of the evaluation are straight running stability and cornering running stability. The results are shown in Tables 1 to 3 below. A higher value indicates a better result.

**Table 1 Results of Evaluation**

| | Comparative Example 1 | Comparative Example 2 | Example 2 | Example 3 | Example 4 | Example 1 |
|---|---|---|---|---|---|---|
| Shape of rubber layer | - | Plate-like | Crescent-like | Crescent-like | Crescent-like | Crescent-like |
| Ratio (Wi/Wb) | - | 1.0 | 0.7 | 0.8 | 0.9 | 1.0 |
| Ratio (Ei/Ec) | - | 1.1 | 1.1 | 1.1 | 1.1 | 1.1 |
| Ratio (Ti/Tc) | - | 1.5 | 1.5 | 1.5 | 1.5 | 1.5 |
| Straight running stability | 2.5 | 5.0 | 4.5 | 5.2 | 5.3 | 5.5 |
| Cornering running stability | 8.0 | 5.1 | 6.3 | 7.5 | 7.8 | 8.0 |

**Table 2 Results of Evaluation**

| | Example 5 | Example 6 | Example 7 |
|---|---|---|---|
| Shape of rubber layer | Crescent-like | Crescent-like | Crescent-like |
| Ratio (Wi/Wb) | 1.0 | 1.0 | 1.0 |
| Ratio (Ei/Ec) | 0.8 | 0.9 | 1.2 |
| Ratio (Ti/Tc) | 1.5 | 1.5 | 1.5 |
| Straight running stability | 5.0 | 5.3 | 5.6 |
| Cornering running stability | 7.5 | 7.8 | 7.0 |

**Table 3 Results of Evaluation**

| | Example 8 | Example 9 | Example 10 | Example 11 | Example 12 | Example 13 |
|---|---|---|---|---|---|---|
| Shape of rubber layer | Crescent-like | Crescent-like | Crescent-like | Crescent-like | Crescent-like | Crescent-like |
| Ratio (Wi/Wb) | 1.0 | 1.0 | 1.0 | 1.0 | 1.0 | 1.0 |
| Ratio (Ei/Ec) | 1.1 | 1.1 | 1.1 | 1.1 | 1.1 | 1.1 |
| Ratio (Ti/Tc) | 0.5 | 1.0 | 1.2 | 1.8 | 2.0 | 2.1 |
| Straight running stability | 5.2 | 5.3 | 5.4 | 5.5 | 5.2 | 5.0 |
| Cornering running stability | 7.3 | 7.3 | 7.7 | 7.7 | 7.6 | 7.5 |

As shown in Tables 1 to 3, the tire of each Example achieves excellent straight running stability while suppressing deterioration of cornering running performance, as compared to the tire of each Comparative Example. From the results of evaluation, advantages of the present invention are clear.

The tire described above is also applicable to various two-wheeled vehicles.

A two-wheeled vehicle tire 2 according to the present invention includes: a belt 14 located inward of a tread 4 in a radial direction; and a rubber layer 16 located inward of the tread 4 in the radial direction. The belt 14 includes a first layer 14a and a second layer 14b located outward of the first layer 14a in the radial direction. Each of the first layer 14a and the second layer 14b includes a large number of cords 32 aligned with each other, and a topping rubber 34. The rubber layer 16 is located between the first layer 14a and the second layer 14b. A thickness of the rubber layer 16 on an equator plane is larger than a thickness of the rubber layer 16 at each outer end, in an axial direction, of the rubber layer 16.

## Claims

1. A two-wheeled vehicle tire (2) comprising:
a tread (4) having an outer surface which forms a tread surface (18);
a belt (14) located inward of the tread (4) in a radial direction; and
a rubber layer (16) located inward of the tread (4) in the radial direction,
wherein the belt (14) includes a first layer (14a) and a second layer (14b) located outward of the first layer (14a) in the radial direction,
each of the first layer (14a) and the second layer (14b) includes a large number of cords (32) aligned with each other, and a topping rubber (34), and
the rubber layer (16) is located between the first layer (14a) and the second layer (14b),
wherein a thickness of the rubber layer (16) on an equator plane (CL) is larger than a thickness of the rubber layer (16) at each outer end, in an axial direction, of the rubber layer (16), and
wherein when a width from the equator plane (CL) to the outer end of the rubber layer (16) in the axial direction is represented as Wi and a width from the equator plane (CL) to an outer end of the second layer (14b) in the axial direction is represented as Wb, a ratio (Wi/Wb) of the width Wi relative to the width Wb is not lower than 0.8 and not higher than 1.0,
**characterized in that**
when the thickness of the rubber layer (16) on the equator plane (CL) is represented as Ti and a thickness of the topping rubber (34) is represented as Tc, a ratio (Ti/Tc) of the thickness Ti relative to the thickness Tc is not lower than 1.0 and not higher than 2.0.

2. A two-wheeled vehicle tire (2) comprising:
a tread (4) having an outer surface which forms a tread surface (18);
a belt (14) located inward of the tread (4) in a radial direction; and
a rubber layer (16) located inward of the tread (4) in the radial direction,
wherein the belt (14) includes a first layer (14a) and a second layer (14b) located outward of the first layer (14a) in the radial direction,
each of the first layer (14a) and the second layer (14b) includes a large number of cords (32) aligned with each other, and a topping rubber (34), and
the rubber layer (16) is located between the first layer (14a) and the second layer (14b),
**characterized in that**
a thickness of the rubber layer (16) on an equator plane (CL) is larger than a thickness of the rubber layer (16) at each outer end, in an axial direction, of the rubber layer (16), and
wherein when a complex elastic modulus of the rubber layer (16) is represented as Ei and a complex elastic modulus of the topping rubber (34) is represented as Ec, a ratio (Ei/Ec) of the complex elastic modulus Ei relative to the complex elastic modulus Ec is not lower than 0.9 and not higher than 1.1.

3. The two-wheeled vehicle tire according to claim 1 or 2, wherein
the thickness of the rubber layer (16) is maximum on the equator plane (CL), and
a shape of the rubber layer (16) is tapered from a portion at which the thickness is maximum, toward an outer side in the axial direction.

4. The two-wheeled vehicle tire according to claim 2, wherein when a width from the equator plane (CL) to the outer end of the rubber layer (16) in the axial direction is represented as Wi and a width from the equator plane (CL) to an outer end of the second layer (14b) in the axial direction is represented as Wb, a ratio (Wi/Wb) of the width Wi relative to the width Wb is not lower than 0.8 and not higher than 1.0.

5. The two-wheeled vehicle tire according to claim or according to claims 3 and 4 when dependent on claim 2, wherein when the thickness of the rubber layer (16) on the equator plane (CL) is represented as Ti and a thickness of the topping rubber (34) is represented as Tc, a ratio (Ti/Tc) of the thickness Ti relative to the thickness Tc is not lower than 1.0 and not higher than 2.0.

## Patentansprüche

1. Zweiradfahrzeugreifen (2), der Folgendes aufweist:
eine Lauffläche (4) mit einer Außenfläche, die eine Laufflächenoberfläche (18) ausbildet;
einen Gürtel (14), der sich einwärts der Lauffläche (4) in einer radialen Richtung befindet; und
eine Gummischicht (16), die sich in der radialen Richtung einwärts von der Lauffläche (4) befindet,
wobei der Gürtel (14) eine erste Schicht (14a) und eine zweite Schicht (14b) aufweist, die sich in der radialen Richtung auswärts von der ersten Schicht (14a) befindet,
jede von der ersten Schicht (14a) und der zweiten Schicht (14b) eine große Anzahl von Schnüren (32), die miteinander ausgerichtet sind, und einen Deckgummi (34) aufweist, und
die Gummischicht (16) sich zwischen der ersten Schicht (14a) und der zweiten Schicht (14b) befindet,
wobei eine Dicke der Gummischicht (16) auf einer Äquatorebene (CL) größer ist als eine Dicke der Gummischicht (16) an jedem äußeren Ende in einer axialen Richtung der Gummischicht (16), und
wobei dann, wenn eine Breite von der Äquatorebene (CL) zu dem äußeren Ende der Gummischicht (16) in der axialen Richtung als Wi repräsentiert ist und eine Breite von der Äquatorebene (CL) zu einem äußeren Ende der zweiten Schicht (14b) in der axialen Richtung als Wb repräsentiert ist, ein Verhältnis (Wi/Wb) der Breite Wi relativ zu der Breite Wb nicht geringer als 0,8 und nicht höher als 1,0 ist,
**dadurch gekennzeichnet, dass**,
wenn die Dicke der Gummischicht (16) an der Äquatorebene (CL) als Ti repräsentiert wird und eine Dicke des Deckgummis (34) als Tc repräsentiert wird, ein Verhältnis (Ti/Tc) der Dicke Ti relativ zu der Dicke Tc nicht geringer als 1,0 und nicht höher als 2,0 ist.

2. Zweiradfahrzeugreifen (2), der Folgendes aufweist:
eine Lauffläche (4) mit einer äußeren Fläche, die eine Laufflächenoberfläche (18) ausbildet;
einen Gürtel (14), der sich einwärts von dem Gürtel (4) in der radialen Richtung befindet, und
eine Gummischicht (16), die sich in der radialen Richtung einwärts von der Lauffläche (4) befindet,
wobei der Gürtel (14) eine erste Schicht (14a) und eine zweite Schicht (14b) aufweist, die sich in der radialen Richtung auswärts von der ersten Schicht (14a) befindet,
jede von der ersten Schicht (14a) und der zweiten Schicht (14b) eine große Anzahl von Schnüren (32), die miteinander ausgerichtet sind, und einen Deckgummi (34) aufweist, und
die Gummischicht (16) sich zwischen der ersten Schicht (14a) und der zweiten Schicht (14b) befindet,
**dadurch gekennzeichnet, dass**
eine Dicke der Gummischicht (16) an einer Äquatorebene (CL) größer als eine Dicke der Gummischicht (16) an jedem äußeren Ende in einer axialen Richtung der Gummischicht (16) ist, und
wobei dann, wenn ein komplexer Elastizitätsmodul der Gummischicht (16) als Ei repräsentiert wird und ein komplexer Elastizitätsmodul des Deckgummis (34) als Ec repräsentiert ist, ein Verhältnis (Ei/Ec) des komplexen Elastizitätsmoduls Ei relativ zu dem komplexen Elastizitätsmodul Ec nicht geringer als 0,9 und nicht höher als 1,1 ist.

3. Zweiradfahrzeugreifen nach Anspruch 1 oder 2, wobei
die Dicke der Gummischicht (16) an der Äquatorebene (CL) maximal ist, und
eine Form der Gummischicht (16) sich von einem Abschnitt, an dem die Dicke maximal ist, zu einer Außenseite in der axialen Richtung verjüngt.

4. Zweiradfahrzeugreifen nach Anspruch 2, wobei dann, wenn eine Breite von der Äquatorebene (CL) zu dem äußeren Ende der Gummischicht (16) in der axialen Richtung als Wi repräsentiert ist und eine Breite von der Äquatorebene (CL) zu einem äußeren Ende der zweiten Schicht (14b) in der axialen Richtung als Wb repräsentiert ist, ein Verhältnis (Wi/Wb) der Breite Wi relativ zu der Breite Wb nicht geringer als 0,8 und nicht höher als 1,0 ist.

5. Zweiradfahrzeugreifen nach Anspruch 2 oder gemäß Ansprüchen 3 und 4, wenn abhängig von Anspruch 2, wobei dann, wenn die Dicke der Gummischicht (16) an der Äquatorebene (CL) als Ti repräsentiert ist und eine Dicke des Deckgummis (34) als Tc repräsentiert ist, ein Verhältnis (Ti/Tc) der Dicke Ti relativ zu der Dicke Tc nicht geringer als 1,0 und nicht höher als 2,0 ist.

## Revendications

1. Pneu de véhicule à deux roues (2) comprenant :
une bande de roulement (4) ayant une surface externe qui forme une surface de bande de roulement (18) ;
une ceinture (14) positionnée vers l'intérieur de la bande de roulement (4) dans une direction radiale ; et
une couche de caoutchouc (16) positionnée vers l'intérieur de la bande de roulement (4) dans la direction radiale,
dans lequel la ceinture (14) comprend une première couche (14a) et une seconde couche (14b) positionnée vers l'extérieur de la première couche (14a) dans la direction radiale,
chacune parmi la première couche (14a) et la seconde couche (14b) comprend un grand nombre de cordes (32) alignées entre elles, et un caoutchouc de gommage (34), et
la couche de caoutchouc (16) est positionnée entre la première couche (14a) et la seconde couche (14b),
dans lequel une épaisseur de la couche de caoutchouc (16) sur un plan d'équateur (CL) est supérieure à une épaisseur de la couche de caoutchouc (16) à chaque extrémité externe, dans une direction axiale, de la couche de caoutchouc (16), et
dans lequel lorsqu'une largeur allant du plan d'équateur (CL) à l'extrémité externe de la couche de caoutchouc (16) dans la direction axiale est représentée comme étant Wi et qu'une largeur allant du plan d'équateur (CL) à une extrémité externe de la seconde couche (14b) dans la direction axiale est représentée étant Wb, un rapport (Wi/Wb) de la largeur Wi par rapport à la largeur Wb n'est pas inférieur à 0,8 et non supérieur à 1,0,
**caractérisé en ce que** :
lorsque l'épaisseur de la couche de caoutchouc (16) sur le plan d'équateur (CL) est représentée comme étant Ti et qu'une épaisseur du caoutchouc de gommage (34) est représentée comme étant Tc, un rapport (Ti/Tc) de l'épaisseur Ti par rapport à l'épaisseur Tc n'est pas inférieur à 1,0 et non supérieur à 2,0.

2. Pneu de véhicule à deux roues (2) comprenant :
une bande de roulement (4) ayant une surface externe qui forme une surface de bande de roulement (18) ;
une ceinture (14) positionnée vers l'intérieur de la bande de roulement (4) dans une direction radiale ; et
une couche de caoutchouc (16) positionnée vers l'intérieur de la bande de roulement (4) dans la direction radiale,
dans lequel la ceinture (14) comprend une première couche (14a) et une seconde couche (14b) positionnée vers l'extérieur de la première couche (14a) dans la direction radiale,
chacune parmi la première couche (14a) et la seconde couche (14b) comprend un grand nombre de cordes (32) alignées entre elles, et un caoutchouc de gommage (34), et
la couche de caoutchouc (16) est positionnée entre la première couche (14a) et la seconde couche (14b),
**caractérisé en ce que** :
une épaisseur de la couche de caoutchouc (16) sur un plan d'équateur (CL) est supérieure à une épaisseur de la couche de caoutchouc (16) à chaque extrémité externe, dans une direction radiale de la couche de caoutchouc (16), et
dans lequel lorsqu'un module élastique complexe de la couche de caoutchouc (16) est représenté comme étant Ei et qu'un module élastique complexe du caoutchouc de gommage (34) est représenté comme étant Ec, un rapport (Ei/Ec) du module élastique complexe Ei par rapport au module élastique complexe Ec n'est pas inférieur à 0,9 et non supérieur à 1,1.

3. Pneu de véhicule à deux roues selon la revendication 1 ou 2, dans lequel :
l'épaisseur de la couche de caoutchouc (16) est maximale sur le plan d'équateur (CL), et
une forme de la couche de caoutchouc (16) est progressivement rétrécie d'une partie à laquelle l'épaisseur est maximale, vers un côté externe dans la direction axiale.

4. Pneu de véhicule à deux roues selon la revendication 2, dans lequel lorsqu'une largeur allant du plan d'équateur (CL) à l'extrémité externe de la couche de caoutchouc (16) dans la direction axiale est représentée comme étant Wi et qu'une largeur allant du plan d'équateur (CL) à une extrémité externe de la seconde couche (14b) dans la direction axiale est représentée comme étant Wb, un rapport (Wi/Wb) de la largeur Wi par rapport à la largeur Wb n'est pas inférieur à 0,8 et non supérieur à 1,0.

5. Pneu de véhicule à deux roues selon la revendication 2 ou selon les revendication 3 et 4 lorsqu'elles dépendent de la revendication 2,
dans lequel lorsque l'épaisseur de la couche de caoutchouc (16) sur le plan d'équateur (CL) est représentée comme étant Ti et qu'une épaisseur du caoutchouc de gommage (34) est représentée comme étant Tc, un rapport (Ti/Tc) de l'épaisseur Ti par rapport à l'épaisseur Tc n'est pas inférieur à 1,0 et non supérieur à 2,0.
